# EUROPEAN PATENT APPLICATION

(11) **EP 4 661 586 A1**
(43) Date of publication of application: **10.12.2025**
(21) Application number: 24752724.5
(22) Date of filing: 29.01.2024
(51) Int. Cl.: H04W 76/11

(54) **COMMUNICATION METHOD AND APPARATUS FOR CLEANING ROBOT SYSTEM, AND DEVICE**

(30) Priority: 10.02.2023 CN 202310135455
(71) Applicant: Beijing Roborock Innovation Technology Co., Ltd., Beijing 102206 (CN)
(72) Inventor: LIU, Yang, Beijing 102200 (CN); CHENG, Yingjie, Beijing 102200 (CN); HE, Zhifeng, Beijing 102200 (CN)
(74) Representative: Manitz Finsterwald Patent- und Rechtsanwaltspartnerschaft mbB
(86) International application number: PCT/CN2024/074453
(87) International publication number: WO 2024/164868

(57) **Abstract**

Provided are a communication method and apparatus for a cleaning robot system, and a device. The method comprises: a cleaning robot acquiring first pairing information for WiFi communication, the first pairing information comprising WiFi access information and a random serial number; the cleaning robot sending the first pairing information to a first docking station by means of a first communication mode, the communication distance of the first communication mode being less than the communication distance of the WiFi communication; the cleaning robot, in response to handshake information returned by the first docking station on the basis of the first pairing information, determining whether the pairing with the first docking station is successful according to the handshake information; and the cleaning robot, when determining that the pairing with the first docking station is successful, communicating with the first docking station by using the WiFi communication mode and the first communication mode.

## Description

### CROSS-REFERENCE TO RELATED APPLICATION

The present disclosure claims priority to Chinese Patent Application No. 202310135455.3, filed on February 10, 2023, the content of which is incorporated herein by reference in its entirety.

### TECHNICAL FIELD

The present disclosure relates to the field of smart home technologies, and in particular, to a communication method, apparatus, and device for a cleaning robot system.

### BACKGROUND

With the development of smart home technologies, cleaning robot systems have become increasingly popular and play a significant role in people's lives.

In conventional technologies, a cleaning robot system usually consists of a mobile cleaning robot and a docking station capable of communicating with the cleaning robot. The connection between the cleaning robot and the docking station is achieved through infrared communication. This communication mode has disadvantages including extremely small effective data volume per transmission, strict positional requirements (for example, the cleaning robot must be in place relative to the docking station; for example, the cleaning robot must satisfy certain communication position and communication direction conditions relative to the docking station to enable docking station control), and a high error rate. Therefore, conventional technologies offer low reliability in terms of communication between the cleaning robot and the docking station in the cleaning robot system.

### SUMMARY

Embodiments of the present disclosure provide a communication method, an apparatus, and a device for a cleaning robot system, which can improve the reliability of communication between a cleaning robot and a docking station in the cleaning robot system.

Other features and advantages of the present disclosure will become apparent from the following detailed description, or may be learned in part through the practice of the present disclosure.

According to a first aspect of the embodiments of the present disclosure, provided is a communication method for a cleaning robot system. The cleaning robot system includes a cleaning robot and a first docking station capable of communicating with the cleaning robot. The method includes: acquiring, by the cleaning robot, first pairing information for WiFi communication, where the first pairing information includes WiFi access information and a random serial number; sending, by the cleaning robot, the first pairing information to the first docking station via a first communication mode, where a communication distance of the first communication mode is less than a communication distance of the WiFi communication; determining, by the cleaning robot in response to handshake information returned by the first docking station based on the first pairing information, whether pairing with the first docking station is successful according to the handshake information; and communicating with the first docking station by using a WiFi communication mode and the first communication mode when the pairing with the first docking station is successful.

According to a second aspect of the embodiments of the present disclosure, provided is a communication method for a cleaning robot system. The cleaning robot system includes a cleaning robot and a first docking station capable of communicating with the cleaning robot. The method includes: receiving, by the first docking station, first pairing information sent by the cleaning robot for WiFi communication via a first communication mode, where the first pairing information includes WiFi access information and a random serial number, and a communication distance of the first communication mode is less than a communication distance of the WiFi communication; establishing a WiFi connection with the cleaning robot based on the WiFi access information in the first pairing information, generating handshake information, and sending the handshake information to the cleaning robot by the first docking station, such that the cleaning robot determines whether pairing with the first docking station is successful according to the handshake information; and communicating, by the first docking station, with the cleaning robot by using a WiFi communication mode and the first communication mode.

According to a third aspect of the embodiments of the present disclosure, provided is a communication apparatus for a cleaning robot system. The cleaning robot system includes a cleaning robot and a first docking station capable of communicating with the cleaning robot. The apparatus includes: a pairing information acquiring unit, configured to enable the cleaning robot to acquire first pairing information for WiFi communication, where the first pairing information includes WiFi access information and a random serial number; a pairing information sending unit, configured to enable the cleaning robot to send the first pairing information to the first docking station via a first communication mode, where a communication distance of the first communication mode is less than a communication distance of the WiFi communication; an information matching unit, configured to enable, in response to handshake information returned by the first docking station based on the first pairing information, the cleaning robot to determine whether pairing with the first docking station is successful according to the handshake information; and a communication unit, configured to enable the cleaning robot to communicate with the first docking station by using a WiFi communication mode and the first communication mode when the pairing with the first docking station is determined to be successful.

According to a fourth aspect of the embodiments of the present disclosure, provided is a communication apparatus for a cleaning robot system. The cleaning robot system includes a cleaning robot and a first docking station capable of communicating with the cleaning robot. The apparatus includes: a pairing information receiving unit, configured to enable the first docking station to receive, by using a first communication mode, first pairing information sent by the cleaning robot for WiFi communication, where the first pairing information includes WiFi access information and a random serial number, and a communication distance of the first communication mode is less than a communication distance of the WiFi communication; a handshake information sending unit, configured to enable the first docking station to establish a WiFi connection with the cleaning robot based on the WiFi access information in the first pairing information, generate handshake information, and send the handshake information to the cleaning robot, such that the cleaning robot determines whether pairing with the first docking station is successful according to the handshake information; and a communication unit, configured to enable the first docking station to communicate with the cleaning robot by using a WiFi communication mode and the first communication mode.

According to a fifth aspect of the embodiments of the present disclosure, provided is a communication device for a cleaning robot system. The communication device for the cleaning robot system includes a memory and a processor. The memory stores a computer program. The processor, when executing the computer program, is caused to perform the steps of the above method.

According to a sixth aspect of the embodiments of the present disclosure, provided is a computer-readable storage medium storing one or more programs. The one or more programs, when executed by one or more processors, cause the one or more processors to perform the steps of the above method. It should be understood that both the foregoing general description and the following detailed description are exemplary and explanatory only and are not construed as limiting the present disclosure.

### BRIEF DESCRIPTION OF THE DRAWINGS

The drawings, which are incorporated into and constitute a part of the specification, illustrate embodiments of the present disclosure and are used in conjunction with the specification to explain the principles of the present disclosure. Apparently, the drawings in the following description are merely some embodiments of the present disclosure, and those of ordinary skill in the art may still derive other drawings from these drawings without creative efforts. In the drawings:
FIG. 1 shows an application environment diagram of a communication method for a cleaning robot system according to some embodiments of the present disclosure.
FIG. 2 shows a schematic flowchart of a communication method for a cleaning robot system according to some embodiments of the present disclosure.
FIG. 3 shows a sequence diagram of a communication method for a cleaning robot system according to some embodiments of the present disclosure.
FIG. 4 shows a schematic flowchart of a communication method for a cleaning robot system according to some other embodiments of the present disclosure.
FIG. 5 shows a schematic flowchart of a communication method for a cleaning robot system according to yet some other embodiments of the present disclosure.
FIG. 6 shows a structural block diagram of a communication apparatus for a cleaning robot system according to some embodiments of the present disclosure.
FIG. 7 shows a structural block diagram of a communication apparatus for a cleaning robot system according to some other embodiments of the present disclosure.
FIG. 8 shows an internal structure diagram of a communication device for a cleaning robot system according to some embodiments of the present disclosure.

### DETAILED DESCRIPTION

The technical solutions in embodiments of the present disclosure will be clearly and completely described hereinafter with reference to the drawings in the embodiments of the present disclosure. Apparently, the described embodiments are merely some embodiments of the present disclosure, rather than all of the embodiments. Based on the embodiments in the present disclosure, all other embodiments obtained by those of ordinary skill in the art without creative efforts shall fall within the protection scope of the present disclosure.

Furthermore, the features, structures, or characteristics described in the embodiments of the present disclosure may be combined in one or more embodiments in any suitable manner. In the following description, many details are provided to give a full understanding of the embodiments of the present disclosure. However, those skilled in the art will appreciate that the technical solutions of the present disclosure may be practiced without one or more of the specific details, or other methods, components, apparatuses, steps, and the like may be employed. In other cases, well-known methods, apparatuses, implementations, or operations are not shown or described in detail to avoid obscuring aspects of the present disclosure.

The block diagrams shown in the drawings are functional entities only, which do not necessarily correspond to physically independent entities. That is, these functional entities may be implemented in the form of software, or in one or more hardware modules or integrated circuits, or across different networks and/or processor apparatuses and/or microcontroller apparatuses.

The flowcharts shown in the drawings are merely illustrative and do not necessarily include all of the contents and operations/steps, nor are they necessarily executed in the order described. For example, some operations/steps may be further decomposed, while other operations/steps may be fully or partially combined. Therefore, the actual execution order may vary depending on the actual situation.

It should be noted that the terms "first", "second", and the like in the specification, claims, and the above drawings of the present disclosure are defined to distinguish similar objects, and do not have to be used to describe a specific order or sequence. It should be understood that the objects used in such a way are interchangeable in proper circumstances, such that the embodiments of the present disclosure described herein can be implemented in an order other than those illustrated or described.

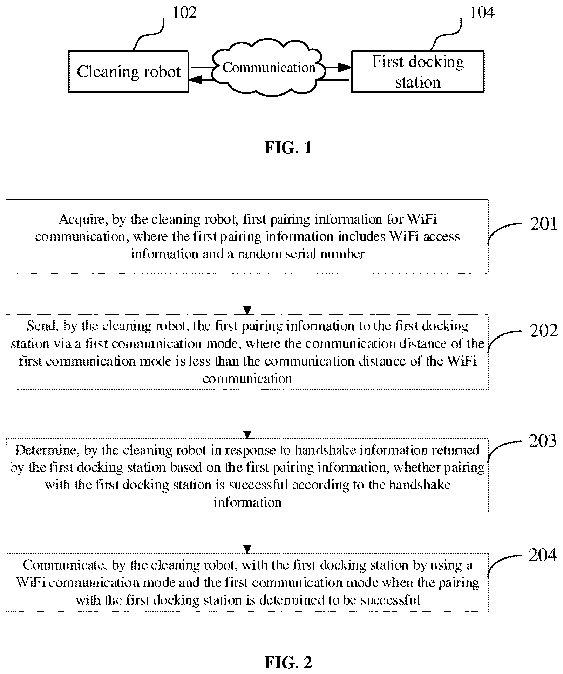

The communication method for the cleaning robot system according to some embodiments of the present disclosure may be applied to the application environment shown in FIG. 1. In some embodiments, the cleaning robot system includes a cleaning robot 102 and a first docking station 104 configured to place the cleaning robot. The cleaning robot 102 and the first docking station 104 can communicate with each other. Currently, the cleaning robot 102 and the first docking station 104 can communicate with each other via short-range communication modes, such as infrared communication. However, this has disadvantages including extremely small effective data volume per transmission, strict positional requirements (two communicating parties need to be close and aligned on the same line), and a high error rate. In some embodiments of the present disclosure, wireless fidelity (referred to as "WiFi") communication is established between the cleaning robot 102 and the first docking station 104. The transmission distance of the WiFi communication mode is significantly greater than the transmission distance of the short-range communication modes such as infrared communication, such that large-volume data transmission and remote data synchronization can be implemented between the cleaning robot 102 and the first docking station 104. Therefore, the issues of extremely small effective data volume per transmission, strict positional requirements, and high error rate associated with the short-range communication modes such as infrared communication are addressed, thereby improving the communication reliability of the cleaning robot.

In some embodiments, as shown in FIG. 2, provided is a communication method for a cleaning robot system. Taking the application of the method in the cleaning robot in FIG. 1 as an example, the method may include steps 201 to 204.

In step 201, the cleaning robot acquires first pairing information for WiFi communication. The first pairing information includes WiFi access information and a random serial number.

It should be understood that pairing refers to the process of creating one-to-one remote communication between the cleaning robot and the first docking station. The first pairing information may include WiFi access information and a random serial number. In some embodiments, the WiFi access information includes information required to access a WiFi network, such as a service set identifier of the WiFi network and/or a port number of a WiFi service.

In step 202, the cleaning robot sends the first pairing information to the first docking station via a first communication mode. The communication distance of the first communication mode is less than the communication distance of the WiFi communication.

In some embodiments, the first communication mode may be a short-range wireless communication mode such as infrared communication or Bluetooth communication. Compared with the first communication mode, the WiFi communication mode features a long communication distance and a large data-carrying capacity per communication.

In some embodiments, the first communication mode is infrared communication, and the cleaning robot may send the first pairing information to the first docking station via infrared communication. Meanwhile, the WiFi service is activated, and the cleaning robot waits for the first docking station to return handshake information, so as to achieve the WiFi communication between the cleaning robot and the first docking station.

In step 203, in response to the handshake information returned by the first docking station based on the first pairing information, the cleaning robot determines whether pairing with the first docking station is successful according to the handshake information.

In some embodiments, the handshake information may include identification information of the first docking station, the random serial number in the first pairing information, and the like.

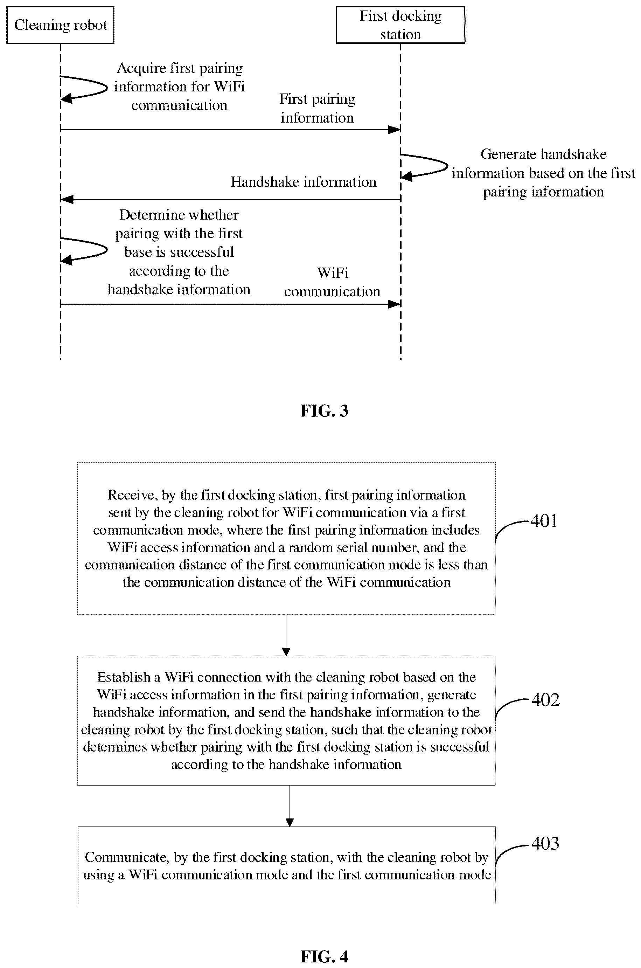

FIG. 3 shows a sequence diagram of a communication method for a cleaning robot system according to some embodiments of the present disclosure. Referring to FIGs. 2 and 3, after receiving the first pairing information, the first docking station accesses the WiFi service of the cleaning robot based on the WiFi access information carried in the first pairing information, generates handshake information, and sends the handshake information to the cleaning robot.

In some embodiments, the first docking station may generate the handshake information based on the identification information of the first docking station and the random serial number in the first pairing information, and then send the handshake information to the cleaning robot via the first communication mode.

After receiving the handshake information, the cleaning robot needs to verify the handshake information to determine whether the pairing between the cleaning robot and the first docking station is successful. In some embodiments, the cleaning robot can determine whether the random serial number carried in the handshake information is the same as the random serial number carried in the first pairing information. When the two are the same, the pairing with the first docking station is determined to be successful.

It should be understood that if the handshake information is generated based on the random serial number in the first pairing information, the random serial number carried in the handshake information should be the same as the random serial number carried in the first pairing information. Therefore, if the random serial number carried in the handshake information is the same as the random serial number carried in the first pairing information, it indicates that the pairing between the cleaning robot and the first docking station is successful. If the random serial number carried in the handshake information is different from the random serial number carried in the first pairing information, it indicates that the pairing between the cleaning robot and the first docking station is unsuccessful.

In step 204, the cleaning robot communicates with the first docking station by using a WiFi communication mode and the first communication mode when the pairing with the first docking station is determined to be successful.

In some embodiments, when the pairing with the first docking station is determined to be successful, the cleaning robot may exchange a large amount of data information with the first docking station via the WiFi communication mode, and exchange a small amount of data information (such as heartbeat information) with the first docking station via the first communication mode.

In some embodiments, when the pairing with the first docking station is determined to be successful, the cleaning robot negotiates a key with the first docking station based on the random serial number, and communicates with the first docking station by using the WiFi communication mode via the key.

In some embodiments, to ensure the security of the WiFi communication, after the pairing with the first docking station is determined to be successful, the cleaning robot may negotiate the key required for the WiFi communication with the first docking station. The key is related to the random serial number. In some embodiments, the key is generated based on the random serial number. The subsequent information transmitted between the cleaning robot and the first docking station via the WiFi communication mode is encrypted and decrypted by using the key.

In some embodiments, the cleaning robot may store the correspondence between the identification information of the first docking station and the random serial number after the pairing with the first docking station is successful.

In some embodiments, the cleaning robot may record the correspondence between the identification information of the first docking station and the random serial number, and use the correspondence as the information about the currently paired docking station, thereby facilitating a subsequent WiFi reconnection with the first docking station.

In the embodiments of the present disclosure, a large amount of data transmission and remote data synchronization may be performed between the cleaning robot and the first docking station via the WiFi communication mode. Meanwhile, a small amount of data information may be exchanged via the first communication mode. This makes use of the advantages of both communication modes, thereby improving the efficiency of information transmission. The two communication modes are used simultaneously for information exchange. Thus, when one communication mode fails, the other communication mode can be used to ensure the continuity of communication, thereby improving the reliability of communication between the cleaning robot and the docking station.

In some embodiments, before acquiring the first pairing information for the WiFi communication, the communication method for the cleaning robot system may further include the following steps:
The cleaning robot determines whether a second docking station currently paired with the cleaning robot is present; when the second docking station is present, the cleaning robot sends identification information of the second docking station to the first docking station via the first communication mode, such that the first docking station determines whether the first docking station matches the second docking station according to the identification information of the second docking station; and in response to a result returned by the first docking station indicating that the first docking station matches the second docking station, the random serial number corresponding to the WiFi access information and the identification information of the second docking station is determined as the first pairing information.

In some embodiments, when exchanging information with the first docking station via the first communication mode, the cleaning robot determines whether a second docking station currently paired with the cleaning robot is present. When no second docking station paired with the cleaning robot is present, it indicates that no WiFi communication is established between the cleaning robot and other docking stations, and then the step of "acquiring first pairing information for WiFi communication" is executed. When the second docking station paired with the cleaning robot is present, it indicates that the WiFi communication is currently established between the cleaning robot and the second docking station. In this case, the cleaning robot needs to send the stored identification information of the second docking station to the first docking station via the first communication mode, such that the first docking station determines whether the first docking station matches the second docking station according to the identification information of the second docking station.

When the first docking station determines that the first docking station matches the second docking station, a result indicating that the first docking station matches the second docking station is returned to the cleaning robot. In response to the result returned by the first docking station indicating that the first docking station matches the second docking station, the cleaning robot uses the random serial number corresponding to the WiFi access information and the identification information of the second docking station as the first pairing information. In this way, automatic connection between the first docking station and the cleaning robot is achieved, thereby avoiding regenerating pairing information by the cleaning robot, and improving the efficiency of establishing WiFi communication between the cleaning robot and the first docking station.

When the first docking station determines that the first docking station does not match the second docking station, a result indicating that the first docking station does not match the second docking station is returned to the cleaning robot. In response to the result returned by the first docking station indicating that the first docking station does not match the second docking station, the cleaning robot disconnects a WiFi connection with the currently paired second docking station, and executes the process of "acquiring the first pairing information for the WiFi communication". In this way, when one cleaning robot corresponds to a plurality of docking stations, the cleaning robot is correctly paired with the first docking station, thereby ensuring the accuracy of the WiFi communication.

In some embodiments, communicating, by the cleaning robot, with the first docking station by using the first communication mode when the pairing with the first docking station is determined to be successful includes: sending, by the cleaning robot, a heartbeat packet to the first docking station via the first communication mode, such that the first docking station determines whether the WiFi connection with the cleaning robot is interrupted according to the heartbeat packet.

In some embodiments, the cleaning robot may send the heartbeat packet to the first docking station at a preset time interval via the first communication mode, so as to maintain heartbeat communication with the first docking station. This allows the first docking station to determine that the WiFi connection with the cleaning robot is interrupted if no heartbeat packet has been received for a long time, and reconnect to the cleaning robot.

In some embodiments, when the cleaning robot is powered off unexpectedly or the WiFi communication is interrupted due to factors such as distance, the WiFi connection between the cleaning robot and the first docking station will be interrupted. The cleaning robot maintains heartbeat communication with the first docking station via the first communication mode, such that it can effectively detect the interruption to the WiFi connection between the cleaning robot and the first docking station, and restore the WiFi connection between the cleaning robot and the first docking station in time when the WiFi connection therebetween is interrupted.

In the embodiments of the present disclosure, the cleaning robot sends basic data such as pairing information and heartbeat packet via the first communication mode. When the WiFi connection between the cleaning robot and the first docking station is interrupted, the cleaning robot may still activate a service according to the stored pairing information, so as to automatically create the WiFi connection between the cleaning robot and the first docking station.

FIG. 4 shows a schematic flowchart of a communication method for a cleaning robot system according to some other embodiments of the present disclosure. As shown in FIG. 4, the embodiments of the present disclosure provide a communication method for a cleaning robot system. Taking the application of the method in the first docking station in FIG. 1 as an example, the method includes the following steps 401 to 403.

In step 401, the first docking station receives, via the first communication mode, first pairing information sent by the cleaning robot for WiFi communication. The first pairing information includes WiFi access information and a random serial number, and the communication distance of the first communication mode is less than the communication distance of the WiFi communication.

In some embodiments, the first communication mode may be a short-range wireless communication mode such as infrared communication or Bluetooth communication. Compared with the first communication mode, the WiFi communication features a long communication distance and a large data-carrying capacity per communication.

The first pairing information may include WiFi access information and a random serial number. In some embodiments, the WiFi access information includes information required to access a WiFi network, such as a service set identifier of the WiFi network and/or a port number of a WiFi service.

In step 402, the first docking station establishes a WiFi connection with the cleaning robot based on the WiFi access information in the first pairing information, generates handshake information, and sends the handshake information to the cleaning robot, such that the cleaning robot determines whether pairing with the first docking station is successful according to the handshake information.

In some embodiments, the handshake information may include identification information of the first docking station, the random serial number in the first pairing information, and the like.

In some embodiments, after receiving the first pairing information, the first docking station may access the WiFi service of the cleaning robot based on the WiFi access information carried in the first pairing information, generate handshake information, and send the handshake information to the cleaning robot. In some embodiments, the first docking station may generate the handshake information based on the identification information of the first docking station and the random serial number in the first pairing information, and then send the handshake information to the cleaning robot via the first communication mode.

After receiving the handshake information, the cleaning robot needs to verify the handshake information to determine whether the pairing between the cleaning robot and the first docking station is successful.

In step 403, the first docking station communicates with the cleaning robot by using a WiFi communication mode and the first communication mode.

In some embodiments, when the pairing with the cleaning robot is determined to be successful, the first docking station may exchange a large amount of data information with the cleaning robot via the WiFi communication mode, and exchange a small amount of data information (such as heartbeat information) with the cleaning robot via the first communication mode.

In some embodiments, to ensure the security of the WiFi communication, after the pairing with the cleaning robot is determined to be successful, the first docking station may negotiate a key required for the WiFi communication with the cleaning robot. The key is related to the random serial number. The subsequent information transmitted between the first docking station and the cleaning robot via the WiFi communication mode is encrypted and decrypted by using the key.

In the embodiments of the present disclosure, the first docking station and the cleaning robot may perform a large amount of data transmission and remote data synchronization via the WiFi communication mode. Meanwhile, a small amount of data information may be exchanged via the first communication mode. This makes use of the advantages of both communication modes, thereby improving the efficiency of information transmission. The two communication modes are used simultaneously for information exchange between the first docking station and the cleaning robot. Thus, when one communication mode fails, the other communication mode can be used to ensure the continuity of communication, thereby improving the reliability of communication between the first docking station and the cleaning robot.

In some embodiments, after the first docking station receives, via the first communication mode, the first pairing information sent by the cleaning robot for the WiFi communication, the communication method for the cleaning robot system may further include the following steps: determining, by the first docking station, whether a cleaning robot currently paired with the first docking station is present; and disconnecting, by the first docking station in response to the presence of the cleaning robot currently paired with the first docking station, the WiFi connection of the cleaning robot currently paired with the first docking station, and executing the step of "establishing the WiFi connection with the cleaning robot based on the WiFi access information in the first pairing information".

In some embodiments, after receiving the first pairing information, the first docking station determines, in response to the first pairing information, whether a cleaning robot paired with the first docking station is present. In some embodiments, the first docking station may acquire its own remote connection status, and determine, based on the remote connection status, whether a cleaning robot currently paired with the first docking station is present.

If the first docking station is being paired with the cleaning robot, it is necessary to disconnect the WiFi connection with the cleaning robot, generate handshake information based on the first pairing information, and then send the handshake information to the cleaning robot that needs to be paired. In this way, when one first docking station corresponds to a plurality of cleaning robots, the cleaning robot is correctly paired with the docking station.

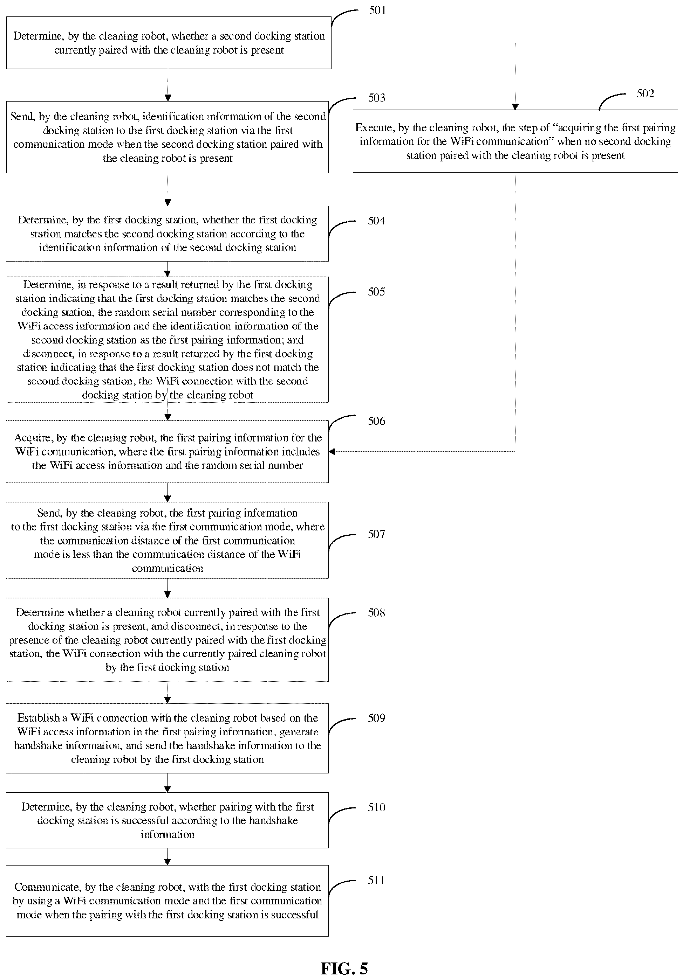

FIG. 5 shows a schematic flowchart of a communication method for a cleaning robot system according to yet some other embodiments of the present disclosure.

As shown in FIG. 5, the communication method for the cleaning robot system may include the following steps:
In step 501, the cleaning robot determines whether a second docking station currently paired with the cleaning robot is present.
In step 502, when no second docking station paired with the cleaning robot is present, the cleaning robot executes the step of "acquiring the first pairing information for the WiFi communication".
In step 503, when the second docking station paired with the cleaning robot is present, the cleaning robot sends identification information of the second docking station to the first docking station via the first communication mode.
In step 504, the first docking station determines whether the first docking station matches the second docking station according to the identification information of the second docking station.
In step 505, in response to a result returned by the first docking station indicating that the first docking station matches the second docking station, the cleaning robot determines the random serial number corresponding to the WiFi access information and the identification information of the second docking station as the first pairing information; and in response to a result returned by the first docking station indicating that the first docking station does not match the second docking station, the cleaning robot disconnects the WiFi connection with the second docking station.
In step 506, the cleaning robot acquires first pairing information for WiFi communication. The first pairing information includes WiFi access information and a random serial number.
In step 507, the cleaning robot sends the first pairing information to the first docking station via the first communication mode. The communication distance of the first communication mode is less than the communication distance of the WiFi communication.
In step 508, the first docking station determines whether a cleaning robot currently paired with the first docking station is present. In response to the presence of the cleaning robot currently paired with the first docking station, the first docking station disconnects the WiFi connection with the currently paired cleaning robot.
In step 509, the first docking station establishes a WiFi connection with the cleaning robot based on the WiFi access information in the first pairing information, generates handshake information, and sends the handshake information to the cleaning robot.
In step 510, the cleaning robot determines whether pairing with the first docking station is successful according to the handshake information.
In step 511, the cleaning robot communicates with the first docking station by using a WiFi communication mode and the first communication mode when the pairing with the first docking station is successful.

It should be understood that although the steps in the flowcharts related to the embodiments described above are displayed sequentially by arrows, these steps are not necessarily executed in the order as indicated by the arrows. Unless explicitly stated herein, there is no strict sequential limitation to the execution of these steps, and they can be executed in other orders. Moreover, at least some of the steps in the flowcharts related to the embodiments described above may include a plurality of steps or a plurality of stages, which do not necessarily need to be completed simultaneously, but can be executed at different times. The order of executing the steps or stages is not necessarily sequential; they may also be executed in turn or alternately with other steps or at least part of the steps or stages in other steps.

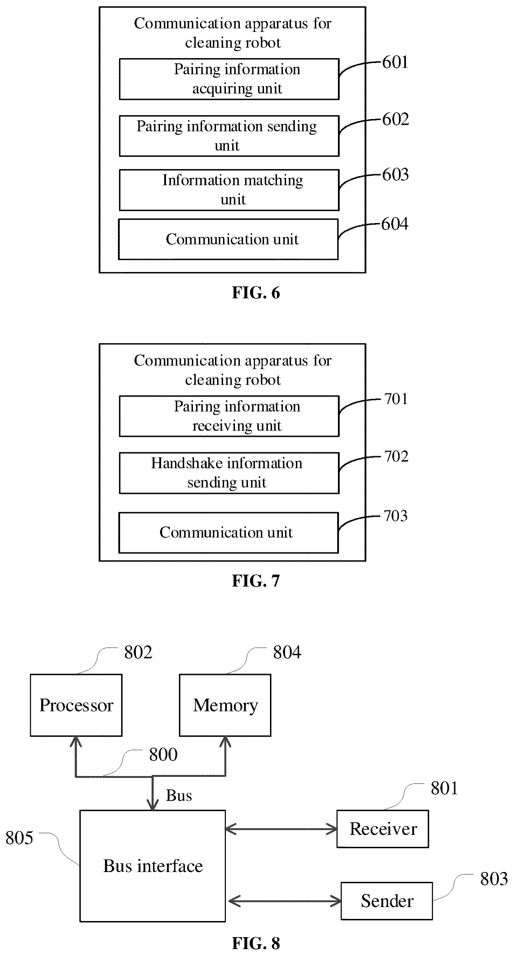

In some embodiments, as shown in FIG. 6, provided is a communication apparatus for a cleaning robot system. The cleaning robot system includes a cleaning robot and a first docking station capable of communicating with the cleaning robot. The communication apparatus includes: a pairing information acquiring unit 601, a pairing information sending unit 602, an information matching unit 603, and a communication unit 604.

In some embodiments, the pairing information acquiring unit 601 is configured to enable the cleaning robot to acquire first pairing information for WiFi communication. The first pairing information includes WiFi access information and a random serial number. The pairing information sending unit 602 is configured to enable the cleaning robot to send the first pairing information to the first docking station via a first communication mode. The communication distance of the first communication mode is less than the communication distance of the WiFi communication. The information matching unit 603 is configured to enable, in response to handshake information returned by the first docking station based on the first pairing information, the cleaning robot to determine whether pairing with the first docking station is successful according to the handshake information. The communication unit 604 is configured to enable the cleaning robot to communicate with the first docking station by using a WiFi communication mode and the first communication mode when the pairing with the first docking station is determined to be successful.

In some embodiments of the present disclosure, the handshake information includes identification information of the first docking station. The communication apparatus further includes an information storage unit (not shown), which is configured to enable the cleaning robot to store the correspondence between the identification information of the first docking station and the random serial number after the pairing between the cleaning robot and the first docking station is successful.

In some embodiments of the present disclosure, the communication apparatus further includes a pairing information determination unit (not shown), which is configured to enable the cleaning robot to determine whether a second docking station currently paired with the cleaning robot is present; enable, when the second docking station paired with the cleaning robot is present, the cleaning robot to send identification information of the second docking station to the first docking station via the first communication mode, such that the first docking station determines whether the first docking station matches the second docking station according to the identification information of the second docking station; and determine, in response to a result returned by the first docking station indicating that the first docking station matches the second docking station, the random serial number corresponding to the WiFi access information and the identification information of the second docking station as the first pairing information.

In some embodiments of the present disclosure, the pairing information determination unit is further configured to enable, in response to a result returned by the first docking station indicating that the first docking station does not match the second docking station, the cleaning robot to disconnect the WiFi connection with the second docking station.

In some embodiments of the present disclosure, the handshake information carries the random serial number, and the information matching unit 603 is further configured to enable the cleaning robot to determine whether the random serial number carried in the handshake information is the same as the random serial number carried in the first pairing information; and enable the cleaning robot to determine that the pairing between the cleaning robot and the first docking station is successful when the random serial number carried in the handshake information is the same as the random serial number carried in the first pairing information.

In some embodiments of the present disclosure, when the cleaning robot determines that the pairing with the first docking station is successful, the communication unit 604 is further configured to enable the cleaning robot to send a heartbeat packet to the first docking station via the first communication mode, such that the first docking station determines whether the WiFi connection with the cleaning robot is interrupted according to the heartbeat packet.

In some embodiments of the present disclosure, the communication unit 604 is further configured to enable, when the pairing between the cleaning robot and the first docking station is successful, the cleaning robot to negotiate a key with the first docking station based on the random serial number, and communicate with the first docking station by using the WiFi communication mode via the key.

In some embodiments, as shown in FIG. 7, provided is a communication apparatus for a cleaning robot system. The cleaning robot system includes a cleaning robot and a first docking station capable of communicating with the cleaning robot. The communication apparatus includes: a pairing information receiving unit 701, a handshake information sending unit 702, and a communication unit 703.

In some embodiments, the pairing information receiving unit 701 is configured to enable the first docking station to receive, by using a first communication mode, first pairing information sent by the cleaning robot for WiFi communication. The first pairing information includes WiFi access information and a random serial number. The communication distance of the first communication mode is less than the communication distance of the WiFi communication. The handshake information sending unit 702 is configured to enable the first docking station to establish a WiFi connection with the cleaning robot based on the WiFi access information in the first pairing information, generate handshake information, and send the handshake information to the cleaning robot, such that the cleaning robot determines whether pairing with the first docking station is successful according to the handshake information. The communication unit 703 is configured to enable the cleaning robot to communicate with the cleaning robot by using a WiFi communication mode and the first communication mode.

In some embodiments of the present disclosure, the handshake information includes identification information of the first docking station and the random serial number.

In some embodiments of the present disclosure, the communication apparatus for the cleaning robot further includes a connection control unit (not shown), which is configured to enable the first docking station to determine whether a cleaning robot currently paired with the first docking station is present after the first docking station receives, by using the first communication mode, the first pairing information sent by the cleaning robot for the WiFi communication; and enable, in response to the presence of the cleaning robot currently paired with the first docking station, the first docking station to disconnect a WiFi connection with the currently paired cleaning robot, and execute the step of "establishing the WiFi connection with the cleaning robot based on the WiFi access information in the first pairing information".

The modules in the above communication apparatus for the cleaning robot system may be entirely or partially implemented by software, hardware, or a combination thereof. The above modules may be embedded in or independent of a processor in a computer device in the form of hardware, or stored in a memory of the computer device in the form of software, such that the processor can load and execute operations corresponding to the above modules.

Based on the same inventive concept, the embodiments of the present disclosure further provide a communication device for a cleaning robot system. FIG. 8 shows an internal structure diagram of a communication device for a cleaning robot system according to some embodiments of the present disclosure. As shown in FIG. 8, the communication device for the cleaning robot system includes one or more memories 804, one or more processors 802, and at least one computer program (program code) stored on the memory 804 and executable on the processor 802. The processor 802, when executing the computer program, is caused to perform the foregoing communication method for the cleaning robot system.

As shown in FIG. 8, in some embodiments, a bus architecture (represented by a bus 800) may include any number of interconnected buses and bridges. The bus 800 links together various circuits, including one or more processors represented by the processor 802 and a memory represented by the memory 804. The bus 800 may also link together various other circuits such as peripheral devices, voltage regulators, and power management circuits. The manner in which they are linked is well known in the art and thus will not be further described herein. A bus interface 805 provides interfaces between the bus 800 and a receiver 801, and a sender 803. The receiver 801 and the sender 803 may be the same element, namely, a transceiver, which provides a unit for communicating with various other apparatuses over a transmission medium. The processor 802 is responsible for managing the bus 800 and general processing, while the memory 804 may be configured to store data used by the processor 802 during operation.

It can be understood by those skilled in the art that the structure shown in FIG. 8 is merely a block diagram of a part of the structure associated with the solutions of the present disclosure, and does not constitute a limitation on the communication device for the cleaning robot to which the solutions of the present disclosure are applied. The communication device for the cleaning robot may include more or fewer components than those illustrated, or combine some components, or have different component arrangements.

In some embodiments of the present disclosure, provided is a computer-readable storage medium having a computer program stored thereon. The computer program, when executed by a processor, causes the processor to perform the following steps:
acquiring, by the cleaning robot, first pairing information for WiFi communication, where the first pairing information includes WiFi access information and a random serial number; sending, by the cleaning robot, the first pairing information to the first docking station via a first communication mode, where the communication distance of the first communication mode is less than the communication distance of the WiFi communication; determining, by the cleaning robot in response to handshake information returned by the first docking station based on the first pairing information, whether pairing with the first docking station is successful according to the handshake information; and communicating, by the cleaning robot, with the first docking station by using a WiFi communication mode and the first communication mode when the pairing with the first docking station is determined to be successful.

In some embodiments, the handshake information includes identification information of the first docking station. The computer program, when executed by the processor, causes the processor to further perform the following steps:
storing, by the cleaning robot, a correspondence between the identification information of the first docking station and the random serial number after the pairing with the first docking station is successful.

In some embodiments, before the cleaning robot acquires the first pairing information for the WiFi communication, the computer program, when executed by the processor, causes the processor to further perform the following steps:
determining, by the cleaning robot, whether a second docking station currently paired with the cleaning robot is present; executing the step of "acquiring the first pairing information for the WiFi communication" when no second docking station paired with the cleaning robot is present; sending, by the cleaning robot, identification information of the second docking station to the first docking station via the first communication mode when the second docking station paired with the cleaning robot is present, such that the first docking station determines whether the first docking station matches the second docking station according to the identification information of the second docking station; and determining, in response to a result returned by the first docking station indicating that the first docking station matches the second docking station, the random serial number corresponding to the WiFi access information and the identification information of the second docking station as the first pairing information.

In some embodiments, after the cleaning robot sends the identification information of the second docking station to the first docking station via the first communication mode such that the first docking station determines whether the first docking station matches the second docking station according to the identification information, the computer program, when executed by the processor, causes the processor to further perform the following steps:
disconnecting, by the cleaning robot in response to a result returned by the first docking station indicating that the first docking station does not match the second docking station, a WiFi connection with the second docking station.

In some embodiments, the handshake information carries the random serial number, and the computer program, when executed by the processor, causes the processor to further perform the following steps:
determining, by the cleaning robot, whether the random serial number carried in the handshake information is the same as the random serial number carried in the first pairing information; and determining, by the cleaning robot, that the pairing between the cleaning robot and the first docking station is successful when the two are the same.

In some embodiments, the computer program, when executed by the processor, causes the processor to further perform the following steps:
sending, by the cleaning robot, a heartbeat packet to the first docking station via the first communication mode such that the first docking station determines whether a WiFi connection with the cleaning robot is interrupted according to the heartbeat packet.

In some embodiments, the computer program, when executed by the processor, causes the processor to further perform the following steps:
negotiating, by the cleaning robot, a key with the first docking station based on the random serial number when the pairing with the first docking station is determined to be successful, and communicating with the first docking station by using the WiFi communication mode via the key.

In some embodiments, provided is a computer-readable storage medium having a computer program stored thereon. The computer program, when executed by a processor, causes the processor to perform the following steps:
receiving, by the first docking station, first pairing information sent by the cleaning robot for a WiFi communication via a first communication mode, where the first pairing information includes WiFi access information and a random serial number, and the communication distance of the first communication mode is less than the communication distance of the WiFi communication;
establishing a WiFi connection with the cleaning robot based on the WiFi access information in the first pairing information, generating handshake information, and sending the handshake information to the cleaning robot by the first docking station, such that the cleaning robot determines whether pairing with the first docking station is successful according to the handshake information; and
communicating, by the first docking station, with the cleaning robot by using a WiFi communication mode and the first communication mode.

In some embodiments, the computer program, when executed by the processor, causes the processor to further perform the following steps:
determining, by the first docking station, whether a cleaning robot currently paired with the first docking station is present; and disconnecting, by the first docking station in response to the presence of the cleaning robot currently paired with the first docking station, a WiFi connection with the currently paired cleaning robot, and executing the step of "establishing the WiFi connection with the cleaning robot based on the WiFi access information in the first pairing information".

In the present disclosure, the first pairing information for the WiFi communication is acquired through the cleaning robot. The first pairing information includes WiFi access information and a random serial number. The cleaning robot sends the first pairing information to the first docking station via the first communication mode. The communication distance of the first communication mode is less than the communication distance of the WiFi communication. In response to handshake information returned by the first docking station based on the first pairing information, the cleaning robot determines whether pairing with the first docking station is successful according to the handshake information. The cleaning robot communicates with the first docking station by using a WiFi communication mode and the first communication mode when the pairing with the first docking station is determined to be successful. The cleaning robot may perform a large amount of data transmission and remote data synchronization with the first docking station via the WiFi communication mode. Meanwhile, a small amount of data information may be exchanged via the first communication mode. This makes use of the advantages of both communication modes, thereby improving the efficiency of information transmission. The two communication modes are used simultaneously for information exchange. Thus, when one communication mode fails, the other communication mode can be used to ensure the continuity of communication, thereby improving the reliability of communication between the cleaning robot and the first docking station.

The functions described herein may be implemented in hardware, software executed by the processor, firmware, or any combination thereof. If implemented in software executed by the processor, the functions may be stored as one or more instructions or codes on a computer-readable medium, or may be transmitted via a computer-readable medium. Other embodiments and implementations fall within the scope and spirit of the present disclosure and the appended claims. For example, due to the nature of software, the functions described above may be implemented using software executed by the processor, hardware, firmware, hardwired connection, or any combination thereof. Furthermore, each functional unit may be integrated into one processing unit, and each functional unit may also physically exist alone, or two or more functional units may be integrated into one unit.

In the several embodiments provided in the present disclosure, it should be understood that the disclosed technical content may be implemented in other manners. The apparatus embodiments described above are merely illustrative. For example, the division of the units may be a division based on logical function, and may be implemented in other ways in actual situation. For example, a plurality of units or components may be combined or integrated into another system, or some features may be ignored or not executed. In addition, the displayed or discussed coupling or direct coupling or communication between each other may be through some interfaces, and indirect coupling or communication between the units or modules may also be in electrical or other forms.

The units described as separate parts may or may not be physically separate, and components used as a control apparatus may or may not be physical units; that is, they may be located in one unit, or may be distributed across a plurality of units. Some or all of the units may be selected according to actual needs to achieve the objectives of the technical solutions of the embodiments of the present disclosure.

The integrated units may be stored in a computer-readable storage medium if they are implemented in the form of software functional units and sold or used as independent products. Based on this understanding, the essence of the technical solutions of the present disclosure, or the part contributing to the prior art, or all or part of the technical solutions may be embodied in the form of a computer software product. The computer software product is stored in one or more storage media and includes several instructions to enable one or more computer devices (which may be a personal computer, a server, a network device, or the like) to execute all or part of the steps of the methods described in the embodiments of the present disclosure. The foregoing storage media include various media capable of storing program codes, such as a USB flash drive, a read-only memory (ROM), a random access memory (RAM), a removable hard disk, a magnetic disk, or an optical disc.

The above are only embodiments of the present disclosure, and are not intended to limit the present disclosure. For those skilled in the art, the present disclosure can be modified and varied. Any modification, equivalent substitution, improvement, and the like made within the spirit and principle of the present disclosure shall all fall within the scope of the claims of the present disclosure.

## Claims

1. A communication method for a cleaning robot system, wherein the cleaning robot system comprises a cleaning robot and a first docking station capable of communicating with the cleaning robot, and the method comprises:
acquiring, by the cleaning robot, first pairing information for WiFi communication, wherein the first pairing information comprises WiFi access information and a random serial number;
sending, by the cleaning robot, the first pairing information to the first docking station via a first communication mode, wherein a communication distance of the first communication mode is less than a communication distance of the WiFi communication;
determining, by the cleaning robot in response to handshake information returned by the first docking station based on the first pairing information, whether pairing with the first docking station is successful according to the handshake information; and
communicating, by the cleaning robot, with the first docking station by using a WiFi communication mode and the first communication mode when the pairing with the first docking station is determined to be successful.

2. The method according to claim 1, wherein the handshake information comprises identification information of the first docking station, and the method further comprises:
storing, by the cleaning robot, a correspondence between the identification information of the first docking station and the random serial number after the pairing with the first docking station is successful.

3. The method according to claim 2, wherein before acquiring, by the cleaning robot, the first pairing information for the WiFi communication, the method further comprises:
determining, by the cleaning robot, whether a second docking station currently paired with the cleaning robot is present;
when the second docking station is present, sending, by the cleaning robot, identification information of the second docking station to the first docking station via the first communication mode such that the first docking station determines whether the first docking station matches the second docking station according to the identification information of the second docking station; and
determining, in response to a result returned by the first docking station indicating that the first docking station matches the second docking station, the random serial number corresponding to the WiFi access information and the identification information of the second docking station as the first pairing information.

4. The method according to claim 3, wherein after sending, by the cleaning robot, the identification information of the second docking station to the first docking station via the first communication mode such that the first docking station determines whether the first docking station matches the second docking station according to the identification information, the method further comprises:
disconnecting, by the cleaning robot in response to a result returned by the first docking station indicating that the first docking station does not match the second docking station, a WiFi connection with the second docking station.

5. The method according to any one of claims 1 to 4, wherein the handshake information carries the random serial number, and determining, by the cleaning robot, whether the pairing with the first docking station is successful according to the handshake information comprises:
determining, by the cleaning robot, whether the random serial number carried in the handshake information is the same as the random serial number carried in the first pairing information; and
determining, by the cleaning robot, that the pairing between the cleaning robot and the first docking station is successful when the random serial number carried in the handshake information is the same as the random serial number carried in the first pairing information.

6. The method according to any one of claims 1 to 4, wherein communicating, by the cleaning robot, with the first docking station by using the first communication mode when the pairing with the first docking station is determined to be successful comprises:
sending, by the cleaning robot, a heartbeat packet to the first docking station via the first communication mode, such that the first docking station determines whether a WiFi connection with the cleaning robot is interrupted according to the heartbeat packet.

7. The method according to any one of claims 1 to 4, further comprising:
negotiating, by the cleaning robot, a key with the first docking station based on the random serial number when the pairing with the first docking station is determined to be successful; and
communicating, by the cleaning robot, with the first docking station by using the WiFi communication mode via the key.

8. A communication method for a cleaning robot system, wherein the cleaning robot system comprises a cleaning robot and a first docking station capable of communicating with the cleaning robot, and the method comprises:
receiving, by the first docking station, first pairing information sent by the cleaning robot for WiFi communication via a first communication mode, wherein the first pairing information comprises WiFi access information and a random serial number, and a communication distance of the first communication mode is less than a communication distance of the WiFi communication;
establishing a WiFi connection with the cleaning robot based on the WiFi access information in the first pairing information, generating handshake information, and sending the handshake information to the cleaning robot by the first docking station, such that the cleaning robot determines whether pairing with the first docking station is successful according to the handshake information; and
communicating, by the first docking station, with the cleaning robot by using a WiFi communication mode and the first communication mode.

9. The method according to claim 8, wherein the handshake information comprises identification information of the first docking station and the random serial number.

10. The method according to claim 8 or 9, wherein after the first docking station receives, by using the first communication mode, the first pairing information sent by the cleaning robot for the WiFi communication, the method further comprises:
determining, by the first docking station, whether a cleaning robot currently paired with the first docking station is present; and
disconnecting, by the first docking station in response to the presence of the cleaning robot currently paired with the first docking station, the WiFi connection with the currently paired cleaning robot, and executing the step of "establishing the WiFi connection with the cleaning robot based on the WiFi access information in the first pairing information".

11. A communication apparatus for a cleaning robot system, wherein the cleaning robot system comprises a cleaning robot and a first docking station capable of communicating with the cleaning robot, and the apparatus comprises:
a pairing information acquiring unit, configured to enable the cleaning robot to acquire first pairing information for WiFi communication, wherein the first pairing information comprises WiFi access information and a random serial number;
a pairing information sending unit, configured to enable the cleaning robot to send the first pairing information to the first docking station via a first communication mode, wherein a communication distance of the first communication mode is less than a communication distance of the WiFi communication;
an information matching unit, configured to enable, in response to handshake information returned by the first docking station based on the first pairing information, the cleaning robot to determine whether pairing with the first docking station is successful according to the handshake information; and
a communication unit, configured to enable the cleaning robot to communicate with the first docking station by using a WiFi communication mode and the first communication mode when the pairing with the first docking station is determined to be successful.

12. The apparatus according to claim 11, wherein the handshake information comprises identification information of the first docking station, and the apparatus further comprises:
an information storage unit, configured to enable the cleaning robot to store a correspondence between the identification information of the first docking station and the random serial number after the pairing with the first docking station is successful.

13. The apparatus according to claim 12, further comprising:
a pairing information determination unit, configured to enable the cleaning robot to determine whether a second docking station currently paired with the cleaning robot is present; enable, when the second docking station is present, the cleaning robot to send identification information of the second docking station to the first docking station via the first communication mode, such that the first docking station determines whether the first docking station matches the second docking station according to the identification information of the second docking station; and determine, in response to a result returned by the first docking station indicating that the first docking station matches the second docking station, the random serial number corresponding to the WiFi access information and the identification information of the second docking station as the first pairing information.

14. The apparatus according to claim 13, wherein the pairing information determination unit is further configured to enable, in response to a result returned by the first docking station indicating that the first docking station does not match the second docking station, the cleaning robot to disconnect a WiFi connection with the second docking station.

15. The apparatus according to any one of claims 11 to 14, wherein the handshake information carries the random serial number, and the information matching unit is further configured to enable the cleaning robot to determine whether the random serial number carried in the handshake information is the same as the random serial number carried in the first pairing information, and enable the cleaning robot to determine that the pairing between the cleaning robot and the first docking station is successful when the random serial number carried in the handshake information is the same as the random serial number carried in the first pairing information.

16. The apparatus according to any one of claims 11 to 14, wherein when the cleaning robot determines that the pairing with the first docking station is successful, the communication unit is further configured to enable the cleaning robot to send a heartbeat packet to the first docking station via the first communication mode, such that the first docking station determines whether a WiFi connection with the cleaning robot is interrupted according to the heartbeat packet.

17. The apparatus according to any one of claims 11 to 14, wherein the communication unit is further configured to enable, when the pairing between the cleaning robot and the first docking station is successful, the cleaning robot to negotiate a key with the first docking station based on the random serial number, and communicate with the first docking station by using the WiFi communication mode via the key.

18. A communication apparatus for a cleaning robot system, wherein the cleaning robot system comprises a cleaning robot and a first docking station capable of communicating with the cleaning robot, and the apparatus comprises:
a pairing information receiving unit, configured to enable the first docking station to receive, by using a first communication mode, first pairing information sent by the cleaning robot for WiFi communication, wherein the first pairing information comprises WiFi access information and a random serial number, and a communication distance of the first communication mode is less than a communication distance of the WiFi communication;
a handshake information sending unit, configured to enable the first docking station to establish a WiFi connection with the cleaning robot based on the WiFi access information in the first pairing information, generate handshake information, and send the handshake information to the cleaning robot, such that the cleaning robot determines whether pairing with the first docking station is successful according to the handshake information; and
a communication unit, configured to enable the first docking station to communicate with the cleaning robot by using a WiFi communication mode and the first communication mode.

19. The apparatus according to claim 18, wherein the handshake information comprises identification information of the first docking station and the random serial number.

20. The apparatus according to claim 18 or 19, further comprising:
a connection control unit, configured to enable the first docking station to determine whether a cleaning robot currently paired with the first docking station is present after the first docking station receives, by using the first communication mode, the first pairing information sent by the cleaning robot for the WiFi communication; and enable, in response to the presence of the cleaning robot currently paired with the first docking station, the first docking station to disconnect the WiFi connection with the currently paired cleaning robot, and execute the step of "establishing the WiFi connection with the cleaning robot based on the WiFi access information in the first pairing information".

21. A communication device for a cleaning robot system, comprising a memory storing a computer program and a processor, wherein the processor, when executing the computer program, is caused to perform the steps of the method according to any one of claims 1 to 7, or perform the steps of the method according to any one of claims 8 to 10.

22. A computer-readable storage medium storing one or more programs, wherein the one or more programs, when executed by one or more processors, cause the one or more processors to perform the steps of the method according to any one of claims 1 to 7, or perform the steps of the method according to any one of claims 8 to 10.
